# EUROPÄISCHE PATENTSCHRIFT

(11) **EP 2 724 041 B1**
(45) Veröffentlichungstag und Bekanntmachung des Hinweises auf die Patenterteilung: **08.08.2018**
(21) Anmeldenummer: 12734784.7
(22) Anmeldetag: 04.06.2012
(51) Int. Cl.: F16D 1/10, F16D 3/77, F16D 13/38, F16D 13/58, F16D 21/06, F16F 15/131

(54) **DREHMOMENTÜBERTRAGUNGSVORRICHTUNG**
TORQUE TRANSMISSION DEVICE
DISPOSITIF DE TRANSMISSION D'UN COUPLE

(30) Priorität: 22.06.2011 DE 102011105682
(43) Veröffentlichungstag der Anmeldung: 30.04.2014
(73) Patentinhaber: Schaeffler Technologies AG & Co. KG, 91074 Herzogenaurach (DE)
(72) Erfinder: HOPPE, Marcus, 77855 Achern (DE)
(86) Internationale Anmeldenummer: PCT/DE2012/000585
(87) Internationale Veröffentlichungsnummer: WO 2012/175065

(56) Entgegenhaltungen:
- EP-A2- 1 617 096
- EP-A2- 1 950 438
- WO-A1-2012/069028
- DE-A1-102005 045 158
- DE-A1-102006 019 977
- DE-A1-102008 032 273

## Beschreibung

Die Erfindung betrifft eine Drehmomentübertragungsvorrichtung mit einer Steckverbindung zwischen einer ersten Baugruppe und einer zweiten Baugruppe, bzw. zwischen einem Drehschwingungsdämpfer und einer Kupplung, wobei an einer der beiden Baugruppen eine Verzahnung ausgebildet ist und mit einem Zahnkranz. Bevorzugt sind solche Drehmomentübertragungseinrichtungen in Kupplungsaggregaten, wie einer Trockenkupplung, einer Nasskupplung oder einem Drehmomentwandler, und Drehschwingungsdämpfern oder zwischen diesen Elementen zur drehschlüssigen Verbindung einer ersten Baugruppe mit einer zweiten Baugruppe des Kupplungsaggregats bzw. Drehschwingungsdämpfers vorgesehen.

Gattungsbildende Steckverbindungen werden in Kupplungsaggregaten beispielsweise dann eingesetzt, wenn eine Baugruppe, beispielsweise ein an der Kurbelwelle einer Brennkraftmaschine angebundenes Zweimassenschwungrad und eine andere Baugruppe, beispielsweise eine Doppelkupplung, miteinander zu verbinden sind. Bei der Endmontage von Brennkraftmaschine und Getriebe werden dann die beiden Baugruppen über die Steckverbindung drehfest und zum Ausgleich gegebenenfalls vorhandener Achsversätzen mit geringfügigem Spiel miteinander verbunden.

Aus der DE 10 2008 027 443 A1 ist ein Kupplungsaggregat mit einer Steckverbindung bekannt. Die Steckverbindung ist als Steckverzahnung ausgebildet, wobei ein Flanschteil des Zweimassenschwungrads einen axial angeformten Ansatz aufweist, an dem ein einen eingangsseitigen Teil der Steckverbindung bildender Zahnkranz stoffschlüssig in Form einer Verschweißung aufgenommen ist. Hierbei müssen an dem Flanschteil der Ansatz angeformt und dieser sowie der Zahnkranz spanend bearbeitet werden.

Aus der DE 10 2005 037 514 A1 ist ein weiteres Kupplungsaggregat mit einer Steckverbindung bekannt. Die Steckverbindung ist als Steckverzahnung ausgebildet, wobei an einer Ausgangsseite des Ausgangsflansches des Zweimassenschwungrads eine Verzahnung ausgebildet ist, in die ein Zahnkranz eingreift, der in einem Halsbereich des Kupplungsdeckels der motorseitigen Einzelkupplung des Doppelkupplungsaggregates ausgebildet ist.

Ein axialer Ausgleich innerhalb eines Antriebstranges eines Fahrzeuges zwischen Antriebsaggregat und Getriebe und hier gerade zwischen Drehschwingungsdämpfer (z.B. Zweimassenschwungrad=ZMS) und Kupplungsaggregat findet üblicherweise an der vorstehend beschriebenen Steckverzahnung statt. So findet beispielsweise auch der Axialausgleich zwischen ZMS und Doppelkupplung üblicherweise über die doppelkupplungsseitige Mitnehmerkranzverzahnung, in welche die Verzahnung des ZMS-Flansches eingreift, statt. Bei der Montage von Motor und Getriebe muss dabei sichergestellt werden, dass die Verzahnungen von ZMS und Doppelkupplung ineinander greifen. Dazu muss die doppelkupplungsseitige Verzahnung am Mitnehmerkranz entsprechend lang ausgeführt sein, damit die Überdeckung beider Teile unter jeder Toleranzlage gewährleistet ist. Dabei ist eine notwendige Länge der Überdeckung auch deshalb so hoch, damit alle Toleranzen von ZMS und Doppelkupplung, aber auch von Motor, Getriebe und Kupplungsglocke an dieser Stelle ausgeglichen werden müssen.

Aus der EP 1 617 096 A2 ist weiterhin eine Doppelkupplung in einem Dreiplattendesign bekannt, bei der eine Verbindung zur Drehmomentübertragung zwischen einer Nabe eines ZMS und einer Zentralplatte alleine über Blattfedern realisiert wird. Motorseitig sieht das System ferner eine Verzahnung eines Anlasserkranzes vor.

Aufgabe der Erfindung ist es daher eine Drehmomentübertragungsvorrichtung mit einer Steckverbindung der Eingangs genannten Art derart zu verbessern, dass der axiale Bauraumbedarf der Verbindung zwischen ZMS und Doppelkupplung reduziert wird.

Die Aufgabe wird erfindungsgemäß gelöst durch eine Drehmomentübertragungsvorrichtung mit einer Steckverbindung mit den Merkmalen des Anspruchs 1. Der Axialausgleich wird also z.B. zwischen einem ZMS und einer Doppelkupplung durch einen axial bewegbar federnd angebundenen Zahnkranz realisiert. Die Erfindung ermöglicht es also hier den Bauraum im Bereich der Verbindungsstelle zwischen ZMS und Doppelkupplung besser auszunutzen, indem ein axial bewegliches Element (d.h. der Zahnkranz) kupplungsseitig zwischen Mitnehmerring und Mitnehmerkranz angebracht wird, welches in axialer Richtung weich und in Umfangsrichtung steif ausgeführt ist, damit das Drehmoment übertragen werden kann und trotzdem alle Toleranzen zwischen ZMS und Doppelkupplung ausgeglichen werden können.

Gemäß der Erfindung ist als axial bewegbare und federnde Verbindung zwischen Zahnkranz und der entsprechend anderen der Baugruppen eine Blattfederverbindung vorgesehen, so dass das Drehmoment von der ersten Baugruppe über die Blattfederverbindung an die zweite Baugruppe übertragen wird. Die Blattfederverbindung kann zumindest eine Blattfeder bzw. ein Blattfederpaket, bevorzugt aber mehrere entlang des Umfangs des Zahnkranzes verteilt angeordnete Blattfedern bzw. Blattfederpakete umfassen.

Die Erfindung wird anhand der in den Figuren 1 bis 8, 9A und 9B dargestellten Ausführungsbeispiele näher erläutert, wobei die Figuren 1-7 nicht -erfindungsgemäße Ausführungsbeispeile darstellen. Dabei zeigen:
- Figur 1: ein Kupplungsdeckel bzw. Mitnehmerring einer Kupplung als eine Baugruppe einer Steckverbindung in Seitenansicht,
- Figur 2: eine Rohform des Zahnkranzes in Draufsicht,
- Figur 3: eine geschnittene Teilansicht des Bauteils nach Figur 1 und einem mit diesem verbundenen (vorliegend: verstemmten) Zahnkranz,
- Figur 3A: eine Draufsicht auf die Baueinheit aus dem Bauteil nach Fig. 1 und einem Zahnkranz, vorliegend verstemmt,
- Figur 4: eine Detaildarstellung der Figur 3,
- Figur 4A: eine Detaildarstellung der Figur 3A,
- Figur 5: eine geschnittene Teilansicht eines Bauteils nach Fig. 1 mit einem mit diesem verbundenen (vorliegend: vernieteten) Zahnkranz,
- Figur 5A: eine Draufsicht auf eine Baueinheit aus dem Bauteil nach Figur 1 und einem Zahnkranz, vernietet entsprechend Figur 5,
- Figur 6: eine Detaildarstellung der Figur 5 und
- Figur 6A: eine Detaildarstellung der Figur 5A,
- Figur 7: eine Draufsicht auf ein weiteres Ausführungsbeispiel der Baueinheit aus Bauteil des Kupplungsaggregats und Zahnkranz, mit modifiziertem Verbindungsbereich zwischen Bauteil und Zahnkranz,

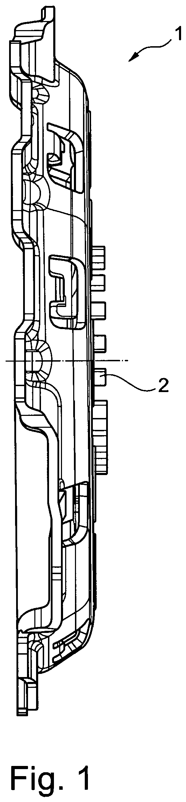

Figur 1 zeigt das Bauteil 1 eines Kupplungsaggregats mit zwei Baugruppen, die mittels einer Steckverbindung miteinander verbunden sind. Das Bauteil 1 stellt dabei ein Gehäuseteil einer auf dem Getriebe angeordneten, eine Baugruppe bildenden Doppelkupplung dar und trägt einen Teil der Steckverbindung. Der andere Teil der Steckverbindung ist auf der anderen, an der Kurbelwelle einer Brennkraftmaschine aufgenommenen Baugruppe, beispielsweise einem Zweimassenschwungrad angeordnet. Zum Aufbau und Funktion eines Kupplungsaggregats und insbesondere dessen Steckverbindung wird beispielsweise auf die DE 10 2008 027 443 A1 verwiesen. Das Bauteil 1 ist für eine Verstemmung mit einem den getriebeseitigen Teil der Steckverbindung bildenden Zahnkranz vorbereitet und weist in axiale Richtung umgelegte, über den Umfang verteilte Zähne 2 oder Laschen auf, an die der Zahnkranz angelegt und mittels Verstemmen der Zähne 2 an dem Bauteil 1 formschlüssig befestigt wird.

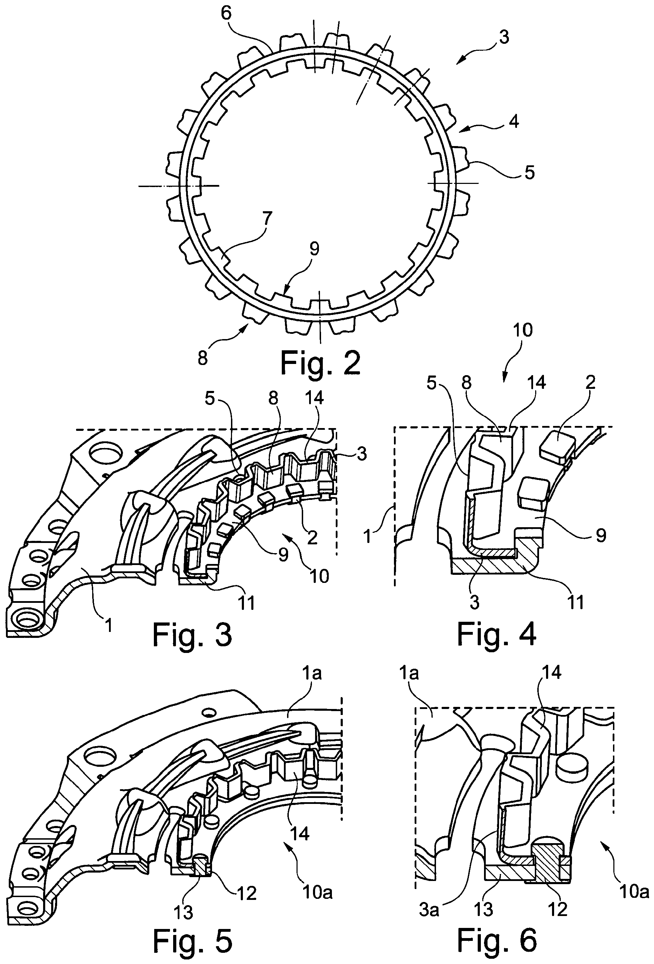

Figur 2 zeigt den Zahnkranz 3 in Rohform mit dem vorzugsweise rollierten Zahnprofil 4, das in dem gezeigten Ausführungsbeispiel als Außenverzahnung 5 ausgebildet ist. Das aus Blech gestanzte Rohteil 6 weist nach innen gerichtete Laschen 7 auf, die axial umgelegt werden, so dass der Zahnkranz 3 im Querschnitt L-förmig ausgebildet wird, bei dem das Zahnprofil den ersten Schenkel 8 und die umgelegten Laschen 7 den zweiten Schenkel 9 ausbilden.

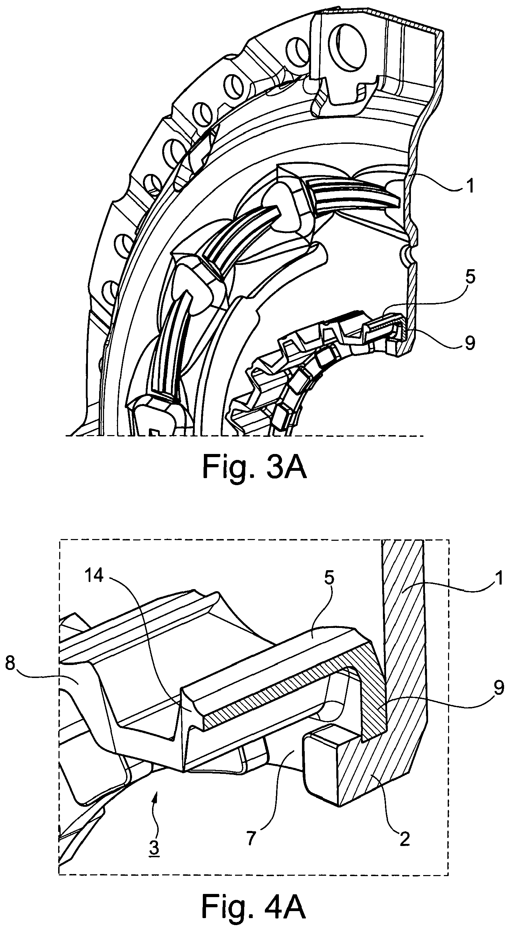

Die Figuren 3 und 4 zeigen eine geschnittene Teilansicht eines Teils der Steckverbindung 10 mit dem Bauteil 1 und dem Zahnkranz 3 im Fertigzustand. Hierbei ist der Zahnkranz 3 mit dem axial ausgerichteten ersten Schenkel mit der Außenverzahnung 5 und dem aus den bezogen auf den Zahnkranz 3 axial umgelegten und radial entlang des radialen Flanschabschnitts 11 des Bauteils 1 angeordneten zweiten Schenkel 9 mittels der Zähne 2 verstemmt. Der Innenumfang des Zahnkranzes 3 ist dabei gegenüber dem Innenumfang des Bauteils 1 bündig angelegt.

Figur 3A zeigt eine Draufsicht auf die so gebildete Baueinheit.

In Figur 4A ist eine Detailansicht zu Figur 3A gezeigt.

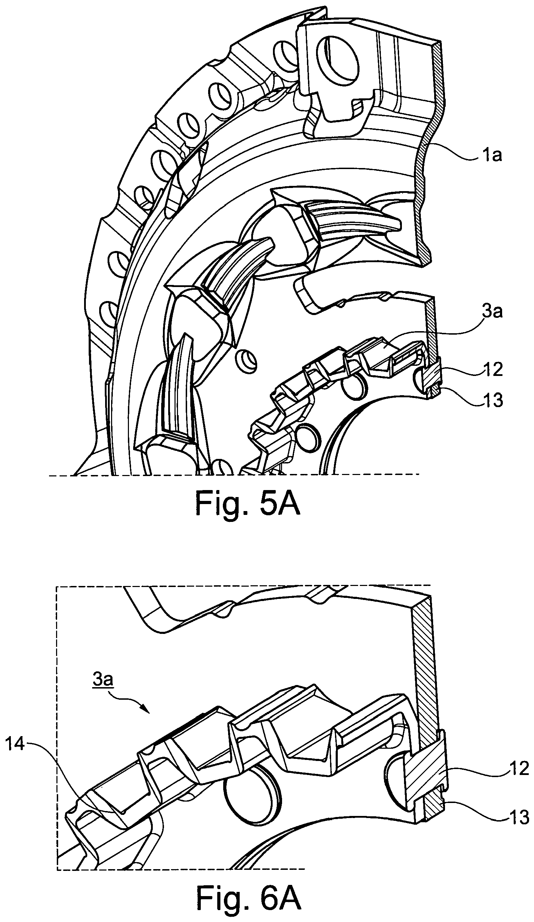

Die Figuren 5 und 6 zeigen eine alternative Ausbildung der Steckverbindung 10 der Figuren 1 bis 4 in Form der Steckverbindung 10a im Teilschnitt und einer detaillierten Darstellung. Hierbei kann das Bauteil 1a in einfacher Weise ohne Zähne am Innenumfang beispielsweise aus Blech hergestellt werden. Statt der axial umgelegten Zähne 2 der Figur 1 weist das Bauteil 1a über den Umfang verteilte Öffnungen 12 auf, die mit Öffnungen 13 des Zahnkranzes 3a fluchten und durch die der Zahnkranz 3a mit dem Bauteil 1a vernietet wird. Die Zahnkränze 3, 3a der Figuren 1 bis 6 weisen eine Einfädelphase 14 zur Ausbildung der Steckverbindung 10, 10a aus.

Figur 5A zeigt eine Draufsicht auf die so gebildete Baueinheit.

Figur 6A ist eine Detailansicht zur Figur 5A abgebildet.

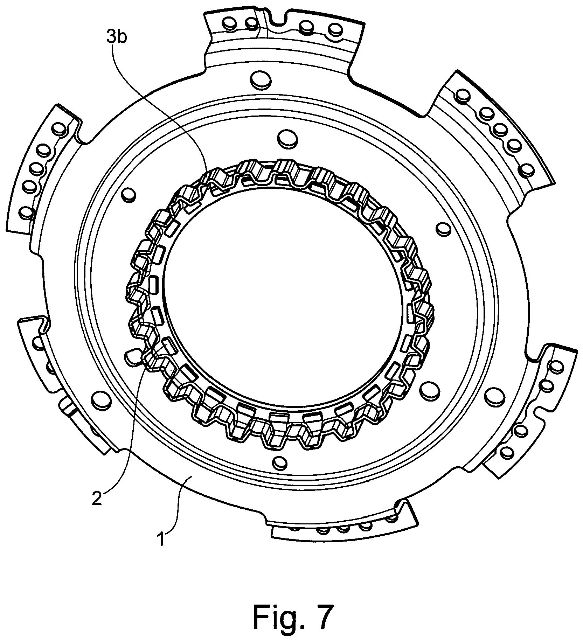

In Figur 7 ist ein weiteres nicht-erfindungsgemäßes Ausführungsbeispiel des Zahnkranzes mit einer weiteren Ausgestaltung der Verbindung zwischen Zahnkranz und Bauteil des Kupplungsaggregats, wie Mitnehmerring, Kupplungsdeckel oder ähnliches gezeigt. Der Zahnkranz umfasst hier wiederum axial erstreckte erste Schenkel mit der Verzahnung und radial erstreckte zweite Schenkel als Verbindungsbereiche mit dem Bauteil, wobei der radial erstrecke zweite Schenkel und das Bauteil unmittelbar benachbart zueinander angeordnet sind. Im Gegensatz zur Ausbildung des Zahnkranzes entsprechend den Figuren 2 bis 4 sind die radial ausgerichteten zweiten Schenkel aber nicht als radial ausgerichtete einseitig offene Laschen, sondern als in Umfangsrichtung ausgerichtete (geschlossene) Schlitze bzw. Fenster ausgebildet, durch welche die Zähne 2 des Bauteils 1 hindurchgreifen und anschließend verstemmt bzw. umgelegt werden.

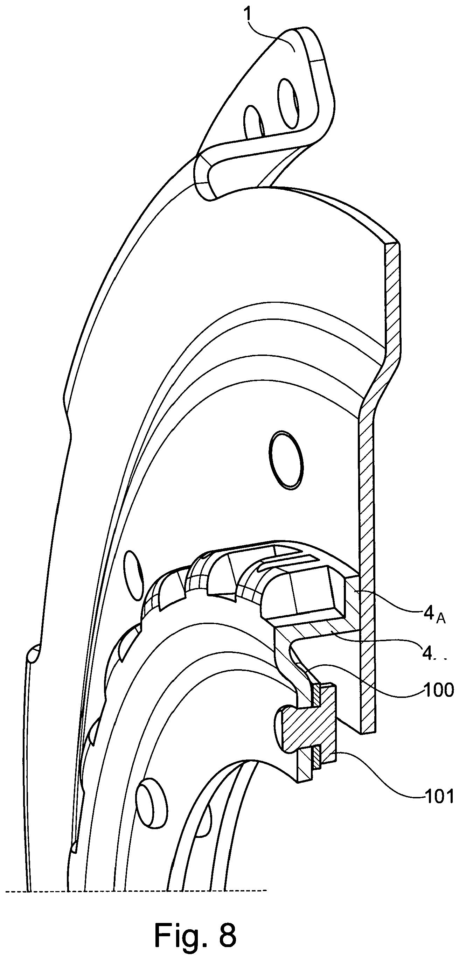

In Figur 8 ist ein Teil des Kupplungsdeckels bzw. Mitnehmerringes 1 eines erfindungsgemäßen Ausführungsbeispieles gezeigt, der beispielsweise ein Kupplungsdeckel einer motorseitigen Einzelkupplung einer Doppelkupplung bilden kann. Dieser Mitnehmerring (als einem Beispiel einer "zweiten Baugruppe") ist über einen Mitnehmerkranz 4 mit einem sekundärseitigen Flansch einem ZMS (als einem Beispiel einer "ersten Bauteil") - über die eine in diesem sekundärseitigen Flansch des ZMS ausgebildete Verzahnung - verbunden zur Drehmomentübertragung von einem Antrieb auf ein Getriebe.

Zwischen Mitnehmerring 1 und Mitnehmerkranz 4 sind mehrere entlang des Umfangs verteilte Blattfedern 100 angeordnet, wobei ein erstes Ende der Blattfedern 100 über eine erste Vernietung 101 mit dem Mitnehmerkranz 4 und ein (in Figur 8 nicht im Einzelnen gezeigtes) zweites Ende der Blattfedern 100 über eine zweite Vernietung 102 mit dem Mitnehmerring 1 verbunden sind. Die Übertragung des vom Antrieb kommenden Drehmomentes erfolgt also über den sekundärseitigen Flansch des ZMS auf den Mitnehmerkranz 4 und von dem Mitnehmerkranz 4 auf die Blattfedern 100 und von den Blattfedern 100 auf den Mitnehmerring 1. Aufgrund der verwendeten Blattfedern wird der Bauraum im Bereich der Verbindungsstelle zwischen ZMS und Doppelkupplung besser ausgenutzt, da der Mitnehmerkranz axial beweglich kupplungsseitig am Mitnehmerring angehängt ist. Die Blattfedern 100 ermöglichen in axialer Richtung der Kupplung betrachtet eine weiche Ausführung und in Umfangsrichtung eine steife Ausführung, so dass das Drehmoment über die Blattfedern übertragen werden kann und dennoch die Toleranzen zwischen ZMS und Doppelkupplung ausgeglichen werden können. Die Verzahnungslänge des Mitnehmerkranzes ist damit gegenüber dem den Figuren 1 bis 7 entnehmbaren direkt vernieteten Mitnehmerkranz deutlich verkürzt.

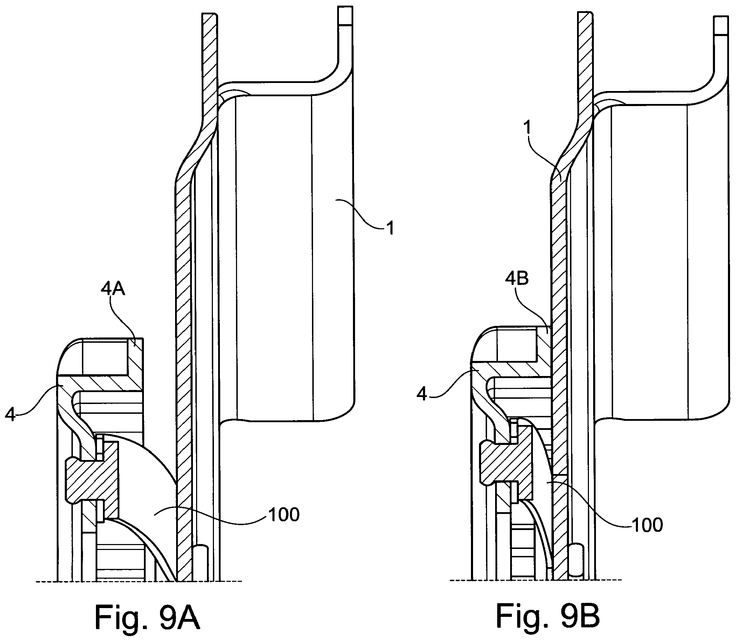

Wie Figur 8 entnehmbar ist vorliegend am Ende der Verzahnung des Mitnehmerkranzes 4 ein Kragen 4A ausgebildet. Dieser Kragen 4A dient als Anschlag für die ZMS-seitige Verzahnung im sekundären Flansch des ZMS (der vorliegend Figur 8 nicht entnehmbar ist). Außerdem dient es als Anschlag für den Mitnehmerkranz am Mitnehmerring. Es gibt dementsprechend zwei Extrempositionen, in denen sich der Mitnehmerkranz 4 befinden kann. Diese Extrempositionen sind in den Figuren 9A und 9B gezeigt.

Wie Figuren 9A entnehmbar, kann der Mitnehmerkranz entsprechend der axialen Beweglichkeit der Blattfedern 100 maximal in Richtung Antrieb (in Figur 9A "ganz links") stehen. Dies bedeutet, dass in dieser Stellung die maximale Ausgleichsmöglichkeit für Toleranzen erreicht ist und somit ZMS und Doppelkupplung am weitesten von einander entfernt sind. Der dabei erreichbare maximale Abstand ist in Figur 9A als Abstand zwischen dem Kragen 4A des Mitnehmerkranzes 4 und der motorseitigen Anlagefläche des Mitnehmerringes erkennbar. Zum anderen kann sich der Mitnehmerkranz, wie Figur 9B entnehmbar "ganz rechts" befinden. Dann wären alle Toleranzen an der entsprechend unteren Grenze und ZMS und Doppelkupplung am nächsten zusammengeschoben. In dieser Stellung ist dann die Blattfeder am weitesten vorgespannt. Zwischen diesen beiden Positionen 9A und 9B sind sämtliche Zwischenstellungen denkbar.

In den Figuren 8 sowie 9A und 9B sind exemplarisch jeweils einzelne Blattfedern dargestellt. Dies ist jedoch nur so zu verstehen, so dass von der Lehre der vorliegenden Erfindung einzelne Blattfedern, sowie Blattfederpakete, sowie mehrere entlang des Umfangs (gleich-)verteilt angeordnete Blattfedern/Blattfederpakete umfasst sind. Auch die Art der Verbindung zwischen den Blattfedern/Blattfederpaketen und den jeweiligen Bauteilen über Nietverbindungen sind alternativ anders ausführbar, beispielsweise über Schraubverbindungen. Auch kann vorgesehen sein, dass ein maximaler Abstand zwischen dem Mitnehmerkranz 4 und dem Mitnehmerring 1 weiter ist als der theoretisch maximal möglich Abstand zwischen ZMS und Doppelkupplung engestellt wird, so dass in diesem Fall eine Vorspannung in Umfangsrichtung der Steckverzahnung aufgrund des bei Montage auftretenden axialen Verschiebens und dadurch bedingten Verdrehens des Mitnehmerkranzes eingestellt werden kann.

Gemäß dem Ausführungsbeispiel der Fig. 8 und 9A,B ist die Verzahnungslänge des Mitnehmerkranzes gegenüber der Ausführung der Fig. 1 bis 7 deutlich gekürzt. Am Ende der Verzahnung befindet sich ein Kragen. Dieser dient als Anschlag für die ZMS-seitige Verzahnung im Flansch. Die Verbindung zwischen Mitnehmerring und Mitnehmerkranz wird durch ein axial bewegliches, federndes Element realisiert, hier zum Beispiel durch Blattfedern dargestellt, die in Umfangsrichtung steif sind um das Drehmoment zu übertragen.

Es gibt zwei Extrempositionen in der sich der Mitnehmerkranz befinden kann. Zum einen kann der Mitnehmerkranz ganz links stehen (Fig. 9A). Dies würde bedeuten, dass alle Toleranzen an der oberen Grenze wären und somit ZMS und Doppelkupplung am weitesten auseinander sind. Zum anderen kann sich der Mitnehmerkranz ganz rechts befinden (Fig. 9B). Dann wären alle Toleranzen an der unteren Grenze und ZMS und Doppelkupplung am nächsten zusammengeschoben. Die Blattfedern wären am weitesten vorgespannt. Alle stufenlosen Positionen dazwischen sind denkbar.

### Bezugszeichenliste

- 1: Bauteil
- 1a: Bauteil
- 2: Zahn
- 3: Zahnkranz
- 3a: Zahnkranz
- 4: Zahnprofil
- 5: Außenverzahnung
- 6: Rohteil
- 7: Lasche
- 8: Schenkel
- 9: Schenkel
- 10: Steckverbindung
- 10a: Steckverbindung
- 11: Flanschabschnitt
- 12: Öffnung
- 13: Öffnung
- 14: Einfädelphase

## Patentansprüche

1. Drehmomentübertragungsvorrichtung mit einer Steckverbindung (10, 10a) zwischen einer ersten Baugruppe und einer zweiten Baugruppe, bzw. zwischen einem Drehschwingungsdämpfer und einer Kupplung, und mit einem Zahnkranz wobei an einer der beiden Baugruppen eine Verzahnung ausgebildet ist, und wobei der in die Verzahnung eingreifende Zahnkranz (3, 3a) an der entsprechend anderen der beiden Baugruppen axial bewegbar federnd angebunden ist, wobei als axial bewegbare und federnde Verbindung zwischen Zahnkranz (3, 3a) und der entsprechend anderen der Baugruppen eine Blattfederverbindung vorgesehen ist, so dass das Drehmoment von der ersten Baugruppe über die Blattfederverbindung an die zweite Baugruppe übertragen wird, **dadurch gekennzeichnet, dass** es sich bei der ersten Baugruppe um einen sekundärseitigen Flansch eines ZMS und bei der zweiten Baugruppe um einen Mitnehmerring (1) handelt, der Zahnkranz als Mitnehmerkranz (4) ausgebildet ist und der Mitnehmerkranz (4) mit dem Mitnehmerring (1) über Blattfedern (100) verbunden, so dass der Mitnehmerkranz (4) axial beweglich kupplungsseitig am Mitnehmerring (1) angehängt ist.

2. Drehmomentübertragungsvorrichtung (10) nach einem der Ansprüche 1 oder 2, wobei die Blattfederverbindung zumindest eine Blattfeder bzw. ein Blattfederpaket, bevorzugt aber mehrere entlang des Umfangs des Zahnkranzes verteilt angeordnete Blattfedern bzw. Blattfederpakete umfasst.

## Claims

1. Torque transmission apparatus having a plug-in connection (10, 10a) between a first assembly and a second assembly, or between a torsional vibration damper and a clutch, and having a toothed rim, a toothing system being configured on one of the two assemblies, and the toothed rim (3, 3a) which engages into the toothing system being attached in a sprung and axially movable manner to the corresponding other one of the two assemblies, a leaf spring connection being provided as an axially movable and sprung connection between the toothed rim (3, 3a) and the corresponding other one of the assemblies, with the result that the torque is transmitted from the first assembly via the leaf spring connection to the second assembly, **characterized in that** the first assembly is a secondary-side flange of a dual-mass flywheel and the second assembly is a flanged sleeve (1), the toothed rim is configured as a driver rim (4), and the driver rim (4) is connected to the flanged sleeve (1) via leaf springs (100), with the result that the driver rim (4) is attached to the flanged sleeve (1) on the clutch side in an axially movable manner.

2. Torque transmission apparatus (10) according to either of Claims 1 and 2, the leaf spring connection comprising at least one leaf spring or one leaf spring assembly, but preferably a plurality of leaf springs or leaf spring assemblies which are arranged distributed along the circumference of the toothed rim.

## Revendications

1. Dispositif de transfert de couple comprenant un raccord enfichable (10, 10a) entre un premier module et un deuxième module, ou entre un amortisseur d'oscillations de torsion et un embrayage, et comprenant une couronne dentée, une denture étant réalisée sur l'un des deux modules, et la couronne dentée (3, 3a) s'engageant dans la denture étant reliée de manière élastique et déplaçable axialement à l'autre, respectif, des deux modules, une liaison à ressort à lame étant prévue en tant que liaison élastique et déplaçable axialement entre la couronne dentée (3, 3a) et l'autre, respectif, des modules, de telle sorte que le couple soit transmis du premier module au deuxième module par le biais de la liaison à ressort à lame, **caractérisé en ce que** le premier module est une bride du côté secondaire d'un volant bimasse (ZMS) et le deuxième module est une bague d'entraînement (1), la couronne dentée est réalisée sous forme de couronne d'entraînement (4) et la couronne d'entraînement (4) est reliée à la bague d'entraînement (1) par le biais de ressorts à lame (100) de telle sorte que la couronne d'entraînement (4) soit accrochée axialement de manière déplaçable du côté de l'embrayage à la bague d'entraînement (1).

2. Dispositif de transfert de couple (10) selon l'une quelconque des revendications 1 ou 2, dans lequel la liaison à ressort à lame comprend au moins un ressort à lame ou un paquet de ressorts à lames, de préférence toutefois plusieurs ressorts à lames ou plusieurs paquets de ressorts à lames disposés de manière répartie le long de la périphérie de la couronne dentée.
